# EUROPEAN PATENT APPLICATION

(11) **EP 2 549 400 A1**
(43) Date of publication of application: **23.01.2013**
(21) Application number: 11305955.4
(22) Date of filing: 22.07.2011
(51) Int. Cl.: G06F 21/00

(54) **Method for protecting an unprotected sound effect program**

(71) Applicant: Thomson Licensing, 92130 Issy-les-Moulineaux (FR)
(72) Inventor: Arnold, Michael, 30916 Isernhagen (DE); Baum, Peter Georg, 30539 Hannover (DE); Gries, Ulrich, 30419 Hannover (DE); Chen, Xiao-Ming, 30165 Hannover (DE)
(74) Representative: Hartnack, Wolfgang

(57) **Abstract**

Manufacturers of audio processing software plug-ins are losing revenues due to the illegal use of their software. Because unauthorised copying of software cannot be prevented, the question is how to find transgressors and how to prove non-licensed use of such plug-ins. The invention facilitates determining whether non-licensed audio processing software has been used, even without physical access the computer using that software. The original audio processing software includes a watermarking embedder for embedding a watermark in the software-processed audio data stream, in order to identify the audio effects software. The software-processed audio data is always watermarked with an identification string related to the special audio effect software applied.

## Description

### Background

Manufacturers of audio processing software plug-ins are losing revenues due to the illegal use of their software, and the audio software industry has a serious problem if sophisticated audio processing software developed with high efforts is stolen. Because unauthorised copying of software cannot be prevented, the question is how to find transgressors and how to prove non-licensed use of such plug-ins. An example of illegal use of audio software is described in the article "Studios in London and Paris found guilty of copyright theft", Pro Sound News Europe, May 2009, GB.

### Invention

For example, a recording studio is using non-licensed audio processing software, e.g. audio effects software, and the corresponding plug-in software manufacturer wants to get evidence of illegal use of the software. However, what normally can be detected is the existence of the plug-ins on the recording studio's computer, which implies having access to the studio computer by an investigator, but it is hard to prove whether the audio processing software has been really applied to the sound.

A problem to be solved by the invention is to determine use of audio effects included in non-licensed audio processing software. This problem is solved by the method disclosed in claim 1.

The invention facilitates determining whether non-licensed audio processing software has been used, even without physical access the computer using that software. The original audio processing software includes a watermarking embedder for embedding a watermark in the software-processed audio data stream, in order to identify the audio effects software. The software-processed audio data is always watermarked with an identification string related to the special audio effect software applied.

The invention provides copyright protection of audio processing software by automatic mandatory watermarking of the processed content, so that there is evidence of the illegal use of the software.

For revealing the existence of illegal software, it is not necessary to physically access a related computer, and in addition the application of the processing software to an audio stream can be documented.

In principle, the inventive method is suited for protecting an unprotected sound effect program, wherein the protected sound effect program includes automatically and mandatorily in its output signal or signals a watermarking and the watermark embedding program is hidden unremovable within the protected sound effect program, and wherein said watermarking uses a secret key and conveys an identification string that represents the kind of sound effect program applied.

Advantageous additional embodiments of the invention are disclosed in the respective dependent claims.

### Drawings

Exemplary embodiments of the invention are described with reference to the accompanying drawings, which show in:
- Fig. 1: watermark embedding following a single sound effect processing;
- Fig. 2: watermark embedding and partial removing for two successive sound effect processings;
- Fig. 3: watermark embedding and removing for multiple successive sound effect processings;
- Fig. 4: chain of sound effects with combined watermark embedding before output;
- Fig. 5: embedding a group of watermarks in consecutive time frames;
- Fig. 6: distribution of multiple watermarks over time and/or frequency.

### Exemplary embodiments

Watermarking systems are used in forensic applications for enabling copyright protection of content. The invention protects the audio processing software as such, which is used for processing content produced by special sound effects. An audio watermark encoder is mandatorily included in the audio processing software, and in order not to destroy the inserted watermark by the audio processing software itself, the watermark encoder is arranged as the last step in the processing chain. Applying the audio effect causes automatic embedding of a watermark identifying the special sound effect.

Examples for sound effects are filters (parametric equaliser, notch filter, FFT filter, graphic equaliser), delay effects (flanger, chorus, reverberation, echo), amplitude effects (normalisation, compressors, amplification, fading), time/pitch changing (pitch shifting, pitch correction, time stretching), restoration (click detection and elimination, noise and hiss reduction) and any combinations thereof which produce a special impression.

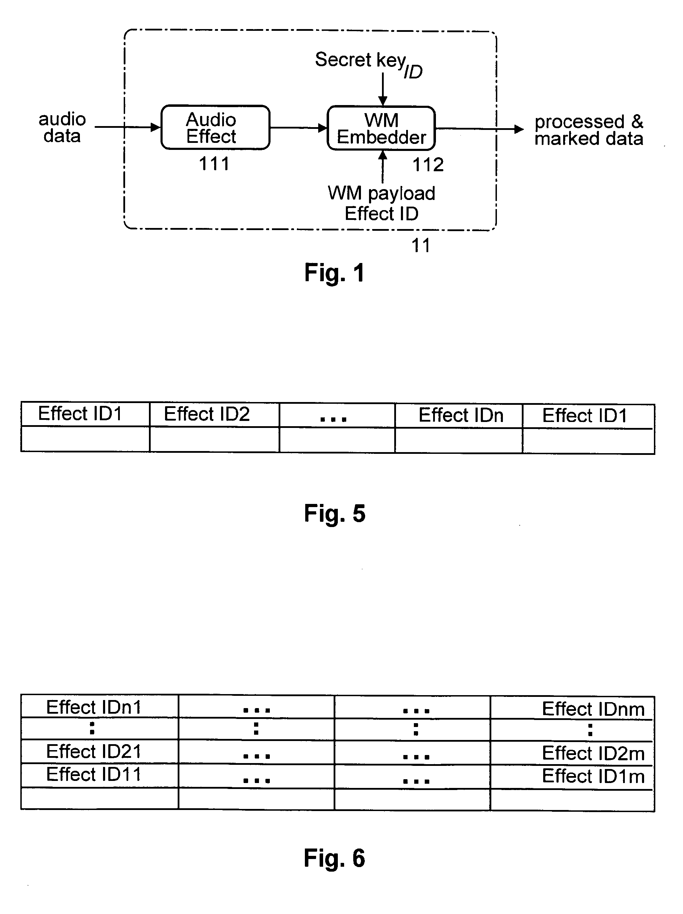

Fig. 1 shows a corresponding embodiment. The complete sound effect processing program 11 includes a sound effect processing program section 111 as such and a watermark embedding program section 112, wherein the watermark embedding software is hidden in the complete sound effect software such that it can normally not be removed. The watermarking 112 as such can be carried out e.g. as disclosed in WO 2007/031423 A1. It receives a secret key_{ID} and a watermark payload that can represent the sound effect identification ID. The secret key_{ID} used is integrated in the protected effect software and specific to the sound effect. This key_{ID} is necessary for the detection of the processed audio data.

The sound effect processing can be mono, stereo, multichannel and/or 3D audio processing. The watermark can be included in one or more channels thereof.

In case the software is copied by a transgressor, the integrated watermark embedder is copied as well because the watermark encoder is an integral part of the audio effect software. This is a forensic tracking application where tracing of illegal use of the audio effect is accomplished by detection of the watermark with the same secret key used during the embedding process.

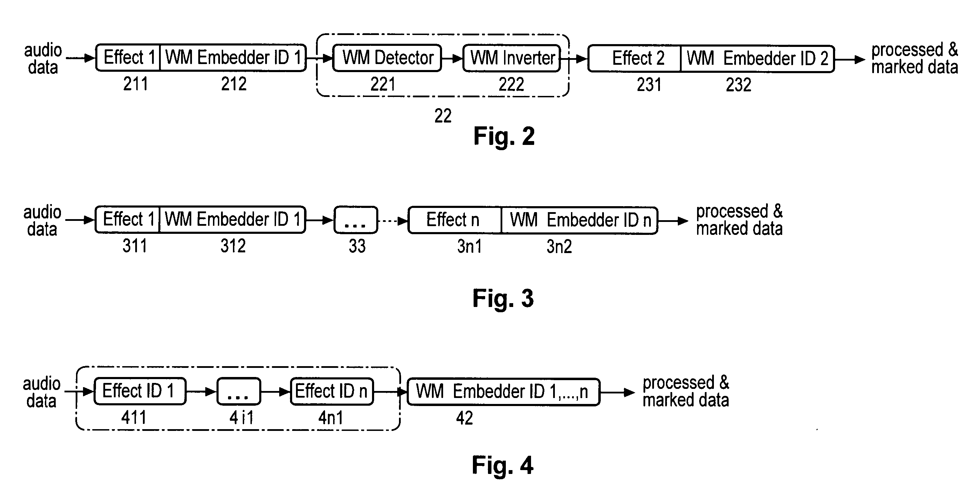

In a different embodiment depicted in Fig. 2, the resulting special effect consists of two consecutive sound effect processing steps/stages 211 and 231 that can be carried out independently from each other. Like in Fig. 1, the complete sound effect processing program includes a watermark embedding program section 212 and 232, respectively, wherein the watermark embedding software is hidden in the complete sound effect software such that it can normally not be removed. The secret key_{ID} and the watermark payload used in 212 and 232, respectively, are not depicted. However, following the watermark embedding program section 212, a reversible watermarking erase processing 22 is used, which includes a watermark detector 221 and a watermark inverter 222 that removes (completely, e.g. by inverting the value of corresponding bits) the watermark embedded in step/stage 212. This prevents the embedding of two watermarks on top of each other, and a possible degradation of the processed audio signal quality.

The WM detector 221 needs the information about the sound effect carried out just before and its corresponding watermark embedded 212, in order to use the right key_{ID} for the WM detection and removal 22.

In a further embodiment depicted in Fig. 3, the resulting special effect consists of n consecutive sound effect processing steps 311 to 3n1 that can be carried out independently from each other. Like in Fig. 1, the complete sound effect processing program includes a watermark embedding program section 312 to 3n2, respectively, wherein the watermark embedding software is hidden in the complete sound effect software such that it can normally not be removed. Following a watermark embedding program section, a reversible watermarking erase processing 33 is used like in Fig. 2, such that each individual audio effect processing step except the last one includes a watermark detector which detects and erases the watermark, wherein the following processing step for the sound embeds a new watermark, such that the final audio output signal is watermark protected by step/stage 3n2. I.e., a combination like 311, 312 and 33 is repeatedly arranged upstream 3n1/3n2. Like in Fig. 2, the secret key_{ID} and the watermark payload used in 312 to 3n2 are not depicted.

This prevents the embedding of several watermarks on top of each other, and a possible degradation of the processed audio signal quality. Only the final sound effect processing 3n1 applied is identified by the last watermark embedded.

As an alternative, the watermarking erase processing 33 is not included at the output of programs 3i2, i=1...n-1, but in programs 3j1 at the input, j=2...n. This has the advantage that the intermediate output of programs 3i2 is always watermark protected.

In a further embodiment, a chain of sound effect processing steps 4k1 is performed, k=1...n, and is commonly identified by embedding a watermark containing the IDs of the individual sound effect processing steps, wherein that sequence of IDs in the watermark is reflecting the chronology of sound effects applied to the audio signal. This is depicted in Fig. 4 and has the advantage that due to applying the watermark embedding at the end of the processing chain the robustness of the watermarks is not influenced during the upstream processing steps/stages.

The simultaneous embedding of different watermarks or IDs can be performed by time and frequency division multiplexing, for example by embedding the watermarks in consecutive time frames as depicted in Fig. 5, or by embedding the watermarks in different frequency bands, i.e. a distribution over time and/or frequency as depicted in Fig. 6.

Nevertheless, adding a WM embedder after each processing step/stage can be necessary if the sound effects are applied at different times or locations.

The invention can also be used correspondingly for protection of video or image effects software.

## Claims

1. Method for protecting an unprotected sound effect program (111; 211,231; 311,3n1; 411,4n1), wherein the protected sound effect program (11) includes automatically and mandatorily in its output signal or signals a watermarking (112; 212,232; 312,3n2; 42) and the watermark embedding program is hidden unremovable within the protected sound effect program, and wherein said watermarking uses a secret key (key_{ID}) and conveys an identification string that represents the kind of sound effect program applied.

2. Method according to claim 1, wherein two or more protected sound effect programs (211,231; 311,3n1) are arranged in series and to all sound effect programs except the last one (231; 3n1) a program (22; 33) for removing the current watermark using the corresponding secret key (key_{ID}) is assigned at their output.

3. Method according to claim 1, wherein two or more protected sound effect programs (211,231; 311,3n1) are arranged in series and to all sound effect programs except the first one (211) a program (22; 33) for removing the current watermark using the corresponding secret key (key_{ID}) is assigned at their input.

4. Method according to claim 1, wherein two or more sound effect programs (411,4i1,4n1) are arranged in series and only the last sound effect program (4n1) include a watermark embedding program (42) that combines in a common watermarking identification strings of said two or more sound effect programs using the corresponding secret key.
